# EUROPEAN PATENT SPECIFICATION

(11) **EP 1 680 459 B1**
(45) Date of publication and mention of the grant of the patent: **30.12.2009**
(21) Application number: 04755985.1
(22) Date of filing: 23.06.2004
(51) Int. Cl.: C08G 77/44

(54) **SILICONE MQ RESIN REINFORCED SILICONE ELASTOMER EMULSIONS**
MIT MQ-SILIKONHARZ VERSTÄRKTES SILIKONELASTOMER ENTHALTENDE EMULSIONEN
EMULSIONS ELASTOMERES DE SILICONE RENFORCE PAR RESINE MQ DE SILICONE

(30) Priority: 08.10.2003 US 509674 P
(43) Date of publication of application: 19.07.2006
(73) Proprietor: Dow Corning Corporation, Midland, MI 48611-0994 (US)
(72) Inventor: LIU, Yihan, Midland, MI 48642 (US)
(74) Representative: Polypatent
(86) International application number: PCT/US2004/020198
(87) International publication number: WO 2005/040250

(56) References cited:
- US-A- 4 661 556
- US-A- 5 973 061

## Description

This invention is related to an aqueous silicone emulsion capable of forming a resin reinforced elastomer upon evaporation of the water. In particular, the dispersed phase of the emulsion contains the crosslinked product of (i) a linear hydroxy terminated polydiorganosiloxane, (ii) a silicone MQ resin, and (iii) an organofunctional polysiloxane. The process for preparing the emulsion is carried out by mixing the three silicone ingredients (i) to (iii), and then emulsifying the mixture to obtain an aqueous base emulsion. The pH of the aqueous base emulsion is then adjusted to facilitate crosslinking, and it is subsequently neutralized. Such emulsions, as well as films of resin reinforced elastomers produced from such emulsions by evaporation, possess several advantages over emulsions typical of the prior art which often contain colloidal silica and reactive organosilanes as crosslinking agents, as their primary sources of reinforcement. For example, compositions of this invention provide good polymer and emulsion stability, uniform reinforcement, and they are free of volatile organic compounds and metal catalysts, typically present in emulsions in the prior art.

Aqueous silicone dispersions crosslinkable upon drying onto substrates into elastomeric films are known in the art. One type uses polydiorganosiloxanes as the primary ingredient, which is crosslinkable through condensation and water removal. Such dispersions typically contain (i) an oil-in-water (O/W) emulsion of a hydroxy group containing polydiorganosiloxane such as an α,ω-dihydroxypolydimethylsiloxane, (ii) a condensation catalyst, (iii) a crosslinking agent, and (iv) an optional non-siliceous inorganic filler. Condensation catalysts most preferred are organo-metallic compounds such as dialkyltindicarboxylates. These hydroxy endblocked polydiorganosiloxane emulsions are generally produced by mechanically emulsifying pre-polymerized linear silicones with anionic and/or nonionic surfactants, or by means of emulsion polymerization of linear or cyclic oligomer siloxanes in anionic surfactant containing acidic systems.

The mechanism used for crosslinking generally falls into three main categories. In the first category, colloidal silica or an alkaline metal silicate is used as the crosslinking agent, and it is combined with an organic metal catalyst, as well as a high pH in the aqueous dispersion, to crosslink the polymer into an elastomer. In the second category, an alkoxysilane is used as the crosslinking agent, and the emulsion is filled with silica or a non-siliceous filler. In the third category, reactive silicone resins or metal siliconates are used to reinforce and/or crosslink an hydroxy endblocked polydiorganosiloxane.

Category one dispersions based on colloidal silica or silicates as crosslinking agents have inherent problems of limited shelf life. Certain measures can be taken to partially overcome this problem such as by aging the emulsion or by using divalent tin catalysts. Nevertheless, the storage stability problem is difficult to solve since neutral emulsions are not stable on storage, and do not cure to an elastomer after storage. The best-known technical solution involves storing the dispersions at a high pH, but high pHs can often be incompatible in certain applications. In addition, organic metal catalysts such as organic tin salts are necessary in curing the elastomeric film upon drying, and the presence of a metal catalyst is not always desirable in many final applications. Another inherent problem associated with dispersions containing colloidal silica or alkaline metal silicates is that the silica may agglomerate upon drying of the emulsion, forming an inhomogeneous film with inferior mechanical properties. Furthermore, there is evidence showing that silica particles in such dispersions reside at the silicone-water interface, with the result that there is less efficient crosslinking and reinforcing of the silicone than otherwise would be the case if the silica were distributed within the oil phase.

Category two dispersions necessarily produce an alcohol as a by-product volatile component. As a result, if significant amounts of alkoxysilane are incorporated, applications of the dispersion can be very limited. In addition, the alkoxysilanes are typically added to the aqueous phase, and have been shown to induce gelation of the emulsion if not added carefully. In category three, the silicone resins or siliconates in such dispersions typically possess D(R₂SiO_{2/2}) units and T(RSiO_{3/2}) units, or M(R₃SiO_{1/2})units, D units and T unit constructions. In rare instances when a silicone resin containing M and Q(SiO_{4/2}) units is used, it is generally in the form of a solution in toluene, again limiting their use in the market place.

Emulsions according to this invention differ from known compositions in that they are prepared with silicone MQ resins for the crosslinking and the reinforcing of the linear hydroxy terminated polydiorganosiloxane in the formation of silicone MQ resin reinforced elastomeric films upon evaporation of water from the emulsion. These emulsions also contain large portions of silicone MQ resins and are free of metal containing catalysts. The compositions according to the invention provide many advantages including (i) good polymer stability both in the emulsion droplets and in the drying film, (ii) the crosslinking occurs sufficiently quickly into an elastomeric film by water evaporation under ambient conditions, (iii) dried films are macroscopically and microscopically homogeneous since the compositions undergo crosslinking and reinforcement via silicone MQ resins instead of via discrete silica particles, (iv) crosslinking and reinforcement occurs throughout the silicone oil phase and there is no domain segregation yielding intrinsically superior mechanical properties, (v) the emulsion is free of volatile organic compounds, (vi) the use of metal containing catalysts is eliminated, and (vii) it possesses a wide range of resin-to-linear ratio yielding a wide range of mechanical properties in the final product.

The invention is directed to a method of making an aqueous silicone emulsion containing a crosslinked silicone elastomer. The emulsion is prepared by combining and mixing (i) a linear hydroxy terminated polydiorganosiloxane, (ii) a silanol containing silicone MQ resin, and (iii) an organofunctional polysiloxane to form a silicone mixture; adding at least one emulsifier and water to the silicone mixture and mixing to obtain an aqueous silicone base emulsion; adding a sufficient amount of an acidic or basic compound to the aqueous silicone base emulsion in order to adjust the pH of the aqueous silicone base emulsion to an acidic or basic pH necessary to facilitate condensation and crosslinking of the linear hydroxy terminated polydiorganosiloxane and the silanol containing silicone MQ resin in forming a crosslinked silicone elastomer; and neutralizing the aqueous silicone emulsion containing the crosslinked silicone elastomer. The aqueous silicone emulsion can be applied to substrate and dried under ambient conditions to obtain an elastomeric silicone film.

These and other features of the invention will become apparent from a consideration of the detailed description.

### DESCRIPTION

The aqueous silicone emulsion according to the invention is prepared by first forming a dispersed phase containing (i) a linear hydroxy terminated polydiorganosiloxane, (ii) a silicone MQ resin, and (iii) an organofunctional polysiloxane. The dispersed phase containing ingredients (i) to (iii) is mixed to form a silicone mixture. Emulsifiers and water are added to the silicone mixture, the ingredients are mixed to obtain an aqueous base emulsion, the pH of the base emulsion is adjusted to an acidic or basic pH to facilitate crosslinking, and the emulsion is neutralized. Elastomeric films are obtained by drying the emulsion on a substrate under ambient conditions.

Generally, the aqueous base emulsion is prepared in the manner and by the process described in detail in copending US Patent Application Serial No. 10/346,544, filed January 16, 2003, entitled "Method of Making Silicone Resin Emulsions", assigned to the same assignee as the present invention, and hereby incorporated by reference (the '544 application). While the copending application describes the method of making the aqueous base emulsion, it does not teach or suggest the concept of the present invention, i.e., adjusting the pH of the aqueous base emulsion to an acidic or basic pH to facilitate crosslinking, neutralizing the emulsion, and obtaining an elastomeric film by drying the emulsion on a substrate under ambient conditions.

In this regard, it should be noted that the mechanism of crosslinking in order to form elastomers is initiated and/or catalyzed by addition of an acid or a base compound to the aqueous base emulsion. Upon addition of an acid or a base compound, the silanol groups present on the silicone MQ resin, and the silanol groups present on the linear hydroxy terminated polydiorganosiloxane, condense with one another and crosslink the silicone MQ resin with the linear hydroxy terminated polydiorganosiloxane to form an elastomeric silicone.

The aqueous silicone emulsion according to the invention is an oil-in-water (O/W) emulsion. The oil phase of the aqueous silicone (O/W) emulsion is a mixture of (i) 1-95 parts by weight, preferably 40-90 parts by weight, of a linear hydroxy terminated polydiorganosiloxane, (ii) 5-60 parts by weight, preferably 10-40 parts by weight, of a silanol group containing silicone MQ resin, and (iii) 0.1-30 parts by weight, preferably 0.5-20 parts by weight, of an organofunctional polysiloxane.

The linear hydroxy terminated polydiorganosiloxane is an α,ω-dihydroxypolydiorganosiloxane in which the organic groups can be monovalent hydrocarbon groups or functionally substituted hydrocarbon groups containing 1-18 carbon atoms, preferably 1-6 carbon atoms. The organic groups are common organic groups such as monovalent substituted and unsubstituted alkyl groups and aryl groups such as methyl, ethyl, propyl, 3,3,3-trifluoropropyl, and phenyl. Preferably, at least 80 percent of the organo groups are methyl groups. The linear hydroxy terminated polydiorganosiloxane can have a viscosity of 0.65-100,000 centistoke (mm²/s), preferably 30-10,000 centistoke (mm²/s).

The acronym *MQ* as used herein is derived from four symbols M, D, T, and Q, which represent the functionality of structural units present in organosilicon compounds containing siloxane units joined by =Si-O-Si= bonds. The monofunctional (M) unit represents R₃SiO_{1/2}; the difunctional (D) unit represents R₂SiO_{2/2}; the trifunctional (T) unit represents RSiO_{3/2} and results in the formation of branched linear siloxanes; and the tetrafunctional (Q) unit represents SiO_{4/2} which results in the formation of crosslinked and resinous compositions. R represents a monovalent organic group, preferably a hydrocarbon group such as methyl. Hence, MQ is used when the siloxane contains all monofunctional M units and tetrafunctional Q units, or a high percentage of M and Q units such as to render it resinous.

The silicone MQ resin according to the invention is a silanol group containing resin of the structure MₓQ_{y} where M represents the R₃SiO_{1/2} unit and Q represents the SiO_{4/2} unit, and wherein R is hydroxy, a monovalent hydrocarbon group, or a functionally substituted hydrocarbon group having 1-6 carbon atoms, preferably the methyl group. The letters x and y represent numbers, and the ratio of x:y is 0.6-0.9, with the proviso that there is on average at least 3 hydroxy groups attached to the silicon atom in the M units per resin molecule.

The organofunctional polysiloxane is a composition of the general formula (R¹₃SiO_{1/2})ₐ(R²₂SiO_{2/2})_{b}(R³SiO_{3/2})_{c}, wherein R¹, R², and R³ are the same or different hydrocarbon or organofunctional substituted hydrocarbon groups having 1-18 carbon atoms, preferably 1-6 carbon atoms; provided that at least one organofunctional substituted hydrocarbon group is present and attached to a silicon atom in the molecule, and that the organofunctional substituted hydrocarbon group is selected from the group consisting of an amino group, an epoxidized amino group, a quaternary ammonium group, a glycidyl group, a mercapto group, a carboxyl group, a polyoxyethylene oxypropylene group, or combinations thereof. The values of a are 0-100, b is 0-1,000, and c is 0-100, provided that at least two of a-c are not zero and the resulting composition is a fluid at room temperature.

Some examples of suitable organofunctional groups are amino groups such as ≡SiCH₂CH₂CH₂NH₂, epoxidized amino groups such as =SiC₄H₈NRC₂H₄NR₂ where R is about 20 percent hydrogen and about 80 percent of the group -CH₂CH(OH)CH₂OH; glycidyl groups such as ≡Si(CH₂)₃OCH₂CH(O)CH₂, polyoxyethylene oxypropylene groups such as ≡Si(CH₂)₃(OCH₂CH₂)₁₀(OCH₂(CH₃)CH]₄OC(O)CH₃, carboxyl groups such as ≡Si(CH₂)₃COOH, mercapto groups such as ≡Si(CH₂)₃SH, and quaternary ammonium groups such as ≡SiC₄H₈NHC₂H₄NHCH₂CH(OH)CH₂N⁺(CH₃)₃Cl⁻.

One particularly preferred organofunctional polysiloxane according to the invention is an amino functional polysiloxane fluid of the structure: 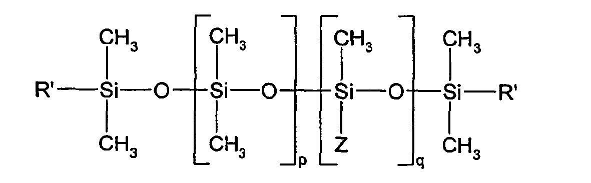 wherein R' can be hydroxyl, a methyl group, or another hydrocarbon or functionally substituted hydrocarbon group having 1-18 carbon atoms; Z is an aminoethylaminopropyl group or an aminoethylaminoisobutyl group; p and q represent integers of 1-1,000 provided that q/p is 0.02-0.1. An especially useful aminofunctional polysiloxane is a fluid of the above structure wherein some amine hydrogen atoms are substituted with an epoxy functional group.

The ratio between the amount of the linear hydroxy terminated polydiorganosiloxane and the silicone MQ resin used will determine the final properties of the silicone elastomer. Thus, the desired spectrum of properties can be varied over a broad range, depending on the ratio of linear hydroxy terminated polydiorganosiloxane to silicone MQ resin. For example, an increasing level of silicone MQ resin leads to an increasingly rigid film having a short elongation at break, a high modulus of elasticity, and a high tensile strength, most suitable in coating applications. In contrast, a low silicone MQ resin content leads to films which have a long elongation at break, a low modulus, and a low tensile strength, which when combined with a suitable filler, can be used as a sealant.

Therefore, one of the main advantages of the present invention is that a broad application spectrum can be obtained by simply varying the mixing ratio between the linear hydroxy terminated polydiorganosiloxane and the silicone MQ resin. Some useful and practical proportions and/or ratios of linear hydroxy terminated polydiorganosiloxane to silicone MQ resin have been determined to be 90:10 to 40:60. While a higher content of the silicone MQ resin is possible, it requires specialized equipment such as pressurized and/or heated mixers, in order to maintain the mixture in a flowable state suitable for emulsification.

In this regard, it should be noted that the relative amount of the organofunctional polysiloxane being used should be maintained at a level sufficient to aid inversion during the process of emulsification according to the method described in the '544 application, but no more than is necessary, for economic reasons. Thus, when the ratio of silicone MQ resin to linear hydroxy terminated polydiorganosiloxane is low, *i.e.*, less than 0.2, it may not be necessary to include the organofunctional polysiloxane solely for the purpose of easing emulsification. The choice in type of organofunctional polysiloxane and its amount should be in accordance with the desired properties of the aqueous silicone emulsion, as well as the desired properties of the resulting elastomeric silicone film being produced. This is an additional advantage of the present invention, in that one is enabled to select a type of organofunctional group in order to provide a silicone MQ resin reinforced organofunctional silicone elastomer particularly suited for targeted applications.

While the range of emulsifiers suitable for use herein can include anionic, cationic, nonionic, amphoteric, and mixtures thereof, it is most preferred to use a mixture consisting of two nonionic surfactants in which one nonionic surfactant has a low HLB (Hydrophile-Lipophile Balance) and the other nonionic surfactant has a high HLB, such that the combined HLB is 11.0-16.0. Some suitable nonionic surfactants include the condensates of ethylene oxide having long chain fatty alcohol groups or fatty acid groups such as C₁₂₋₁₆ alcohol moieties; condensates of ethylene oxide with amines or amides; condensation products of ethylene and propylene oxides; esters of glycerol, sucrose or sorbitol; fatty acid alkylol amides; sucrose esters; polysiloxane polyoxyalkylene copolymers; fluoro-type surfactants; fatty amine oxides. The most suitable nonionic surfactants include the ethoxylated alcohols sold under the trademark TERGITOL® by The Dow Chemical Company, Midland, Michigan. Some examples include TERGITOL® TMN-6 which is an ethoxylated alcohol also known as ethoxylated trimethylnonanol, and TERGITOL® 15-S-15 which is an ethoxylated alcohol also known as C₁₂-C₁₄ secondary alcohol ethoxylate. While the particular amount of emulsifier used in preparing aqueous silicone emulsions according to the invention is not critical, it should be sufficient to provide an appropriate emulsion droplet size.

The aqueous silicone emulsion is catalyzed by the addition to the silicone base emulsion of an appropriate inorganic acid, organic acid, inorganic base, or organic base, to adjust the pH to acidic or basic, in order to facilitate and/or initiate the crosslinking reaction. For example, an alkali metal hydroxide such as sodium hydroxide or potassium hydroxide, and an amine such as triethanolamine, can be used in adjusting the pH of the silicone base emulsion to a pH of 9 or more. After a brief ripening period, the resulting emulsion containing the silicone elastomer can be neutralized by the addition of an acid such as carboxylic acid or citric acid. Alternatively, the silicone base emulsion can first be brought to a pH of 4 or less by the addition of an acid, and then subsequently neutralized with a base.

Other additives known in the art can be included in the emulsion compositions according to the invention such as siliceous and non-siliceous fillers; adhesion promoters such as organofunctional silanes and hydrolysis products of organofunctional silanes; and biocides. Such additives can be added to the emulsion compositions at any appropriate stage during preparation. The final content of silicones in emulsion compositions of the invention can range from 20-70 weight percent.

Procedurally, the process of making aqueous silicone emulsions that form resin reinforced elastomeric films upon water evaporation, begins by mixing (i) the linear hydroxy terminated polydiorganosiloxane, (ii) the silicone MQ resin, and (iii) the organofunctional polysiloxane, until a homogeneous mixture, of the silicone components (i)-(iii) is obtained. If the silicone MQ resin being used is in the form of a solution in an organic solvent such as toluene, however, the resin-in-solvent solution is first mixed with the linear hydroxy terminated polydiorganosiloxane, and subsequently the solvent is stripped to obtain a blend of the silicone MQ resin and the linear hydroxy terminated polydiorganosiloxane.

The blend of (i) and (ii) is then mixed with the organofunctional polysiloxane. Emulsifiers are then added to the mixture of (i)-(iii) and mixed until homogeneous. An initial amount of water, typically 2-20 parts by weight per 100 parts by weight of the silicone mixture of (i)-(iii) is added as a single portion to the mixture containing (i)-(iii) and the emulsifiers, and mixed at a medium to high mixing rate to produce enough shear to invert the emulsion. The remaining water is then added to bring the emulsion to a desired concentration to form the aqueous silicone base emulsion.

The pH of the aqueous silicone base emulsion is adjusted to a pH of 9 or more by adding an appropriate amount of a base compound, for example, such as an alkali metal hydroxide, an amine, or an aqueous solution thereof. The aqueous silicone base emulsion is then kept under agitation for a ripening period, typically a few hours to a day, in order for the crosslinking reaction to occur. Then, a corresponding amount of an acid such as citric acid is added in order to neutralize the emulsion. Alternatively, the aqueous silicone base emulsion can be first brought to a pH of 4 or less with an acid, allowed to ripened, and then neutralized with a base. Ripening at a basic pH is preferred.

A silicone MQ resin reinforced elastomer can be produced by water evaporation of the aqueous silicone base emulsion. Water evaporation can take place under ambient conditions or at an elevated temperature. Typically, a cured elastomeric silicone film can be produced within about 48 hours by drying the ripened aqueous silicone emulsion on a substrate under ambient conditions. The elastomeric silicone film is smooth, it shows good elasticity and strength, and its nature will depend on the particulars of the emulsion composition being dried.

The following examples are set forth in order to illustrate the invention in more detail. All parts and percentages are expressed in terms of weight unless otherwise indicated.

### Example 1

A linear hydroxy terminated polydimethylsiloxane with a viscosity of 2,000 centistoke (mm²/s) was mixed with a silicone MQ resin solution in toluene, the resin being a silanol-bearing silicone MQ resin with a number average molecular weight of about 4,300, and having the average structure [HO(CH₃)₂SiO_{1/2}]₀.₂[(CH₃)₃(SiO_{1/2}]₀.₅[SiO_{4/2}]. The mixture was vacuum distilled at 80°C to strip and remove the toluene. After stripping, the mixture contained 70 percent by weight of the linear hydroxy terminated polydimethylsiloxane and 30 percent by weight of the silicone MQ resin. A Lightning brand mixer with two radial impellers was used to mix 56.8 gram of the mixture with 10.0 gram of an aminofunctional polysiloxane fluid. The fluid consisted of a C₁₃-C₁₅ alcohol terminated aminofunctional polydiorganosiloxane having a viscosity of 4,000 centistoke (mm²/s). The fluid contained on average approximately 98 mole percent of dimethylsiloxane units and 2 mole percent of aminoethyl/aminoisobutylmethyl siloxane units. About 80 mole percent of amine hydrogen present in the fluid had been reacted with glycidol, and the fluid contained approximately 11 percent by weight excess C₁₃-C₁₅ alcohol. About 10.7 gram of nonionic surfactant TERGITOL® TMN-6 and 6.6 gram of pre-warmed TERGITOL® 15-S-40 were added to the mixture and mixed. About 13.3 gram of water was added and mixed at 700 RPM, and a clear gel emulsion was instantly produced. Another portion of 60.0 gram of water was added, mixed at 600 RPM for 30 minutes, and produced a fine bluish white emulsion. The bluish white emulsion was then diluted with another 100 grams of water. About 4.10 gram of a 10 percent by weight aqueous solution of sodium hydroxide was added, and the emulsion was subjected to slow agitation for 24 hours. The next day, 6.13 gram of an aqueous solution of 10 percent by weight of acetic acid was added drop-wise to the aged emulsion and mixed for 30 minutes. The resulting emulsion had an average particle size of 112 nanometer (0.112 micrometer). The emulsion was cast in a plastic Petri dish at room temperature, allowed to dry for 24 hours, and formed a smooth elastomeric film with good strength. The emulsion was stable for more than 6 months.

### Example 2

A Hauschild brand dental mixing cup was used to mix 5.67 gram of the stripped mixture in Example 1 containing the silicone MQ resin and the linear hydroxy terminated polydiorganosiloxane, with one gram of aminofunctional polysiloxane fluid. The fluid contained 95 percent by weight of the fluid used in Example 1, and about 5 percent by weight of a trimethylsiloxy terminated dimethyl/methyl(glycidoxypropyl)/methyl(propyl)(polyethyleneoxide propyleneoxide)(methyl) polysiloxane having a viscosity of 3,100 centistoke (mm²/s). About 1.07 gram of TERGITOL® TMN-6 and 0.60 gram of pre-warmed TERGITOL® 15-S-40 were added to the mixture and mixed. About 1.33 gram of water was added to the mixture, and the sample was spun at 3,000 RPM for 22 seconds forming clear gel emulsion. Two successive portions of 2.67 gram and then 13.5 gram of water were added to the emulsion and spun. The resulting emulsion was bluish white and contained particles having an average size of 121 nanometer (0.121 micrometer). About 0.33 gram of an aqueous solution of 10 percent by weight of sodium hydroxide was added to the emulsion, and the sample was maintained on a magnetic stirrer for 6 hours. The emulsion was neutralized with 0.5 gram of an aqueous solution of 10 percent by weight of acetic acid. The emulsion was cast in a plastic Petri dish at room temperature, allowed to dry for 24 hours, and formed a smooth elastomeric film with good strength. The film had a softer feel than the film prepared in Example 1.

The silicone MQ resin containing emulsions according to the invention are capable of delivering performance properties such as elasticity, strength, and assist in film formation. Thus, they can be used in coating applications, sealants, and in household, cosmetic and personal care applications, to provide greater durability, protective qualities, water resistance, and barrier properties. It can be used in applications where it is necessary to avoid the use of hydrocarbon-based solvents in delivering the silicone elastomer.

## Claims

1. A method of making an aqueous silicone emulsion containing a crosslinked silicone elastomer comprising mixing (i) a linear hydroxy terminated polydiorganosiloxane, (ii) a silanol containing silicone MQ resin, and (iii) an organofunctional polysiloxane to form a silicone mixture; adding at least one emulsifier and water to the silicone mixture and mixing to obtain an aqueous silicone base emulsion; adding a sufficient amount of an acidic or basic compound to the aqueous silicone base emulsion in order to adjust the pH of the aqueous silicone base emulsion to an acidic or basic pH necessary to facilitate condensation and crosslinking of the linear hydroxy terminated polydiorganosiloxane and the silanol containing silicone MQ resin in forming a crosslinked silicone elastomer; and neutralizing the aqueous silicone emulsion containing the crosslinked silicone elastomer.

2. A method according to Claim 1 in which the organofunctional polysiloxane has formula (R¹₃SiO_{1/2})ₐ(R²₂SiO_{2/2})_{b}(R³SiO_{3/2})_{c} wherein R¹, R², and R³ are hydrocarbon or organofunctional substituted hydrocarbon groups having 1-18 carbon atoms; provided that at least one organofunctional substituted hydrocarbon group is attached to a silicon atom in the polysiloxane and the organofunctional substituted hydrocarbon group is selected from the group consisting of an amino group, an epoxidized amino group, a quaternary ammonium group, a glycidyl group, a mercapto group, a carboxyl group, a polyoxyethylene oxypropylene group, or combinations thereof; a is 0-100, b is 0-1,000, and c is 0-100, provided that at least two of a-c are not zero and the organofunctional polysiloxane composition is a fluid at room temperature.

3. A method according to Claim 1 in which the emulsifier comprises two nonionic surfactants having a combined Hydrophile-Lipophile Balance (HLB) of 11.0-16.0.

4. A method according to Claim 1 in which a basic compound is added to the aqueous silicone base emulsion, and the pH is adjusted to a value of 9 or more, to facilitate condensation and crosslinking of the linear hydroxy terminated polydiorganosiloxane and the silanol containing silicone MQ resin in forming the crosslinked silicone elastomer.

5. An aqueous silicone emulsion prepared according to the method defined in Claim 1.

6. A method in which the aqueous silicone emulsion in Claim 5 is applied to substrate and dried under ambient conditions to an elastomeric silicone film.

7. An elastomeric silicone film prepared according to the method defined in Claim 6.

## Patentansprüche

1. Verfahren zur Herstellung einer wässrigen Siliconemulsion, die ein vernetztes Siliconelastomer enthält, umfassend Mischen (i) eines linearen Polydiorganosiloxans mit endständigen Hydroxylgruppen, (ii) eines silanolhaltigen Silicon-MQ-Harzes und (iii) eines organofunktionellen Polysiloxans, um eine Siliconmischung zu bilden; Hinzugeben wenigstens eines Emulgators und Wasser zu der Siliconmischung und Mischen, um eine wässrige Siliconbasisemulsion zu erhalten; Hinzugeben einer ausreichenden Menge einer sauren oder basischen Verbindung zu der wässrigen Siliconbasisemulsion, um den pH der wässrigen Siliconbasisemulsion auf einen sauren oder basischen pH einzustellen, der notwendig ist, um die Kondensation und Vernetzung des linearen Polydiorganosiloxans mit endständigen Hydroxylgruppen und des silanolhaltigen Silicon-MQ-Harzes beim Ausbilden eines vernetzten Siliconelastomers zu fördern, und Neutralisieren der wässrigen Siliconemulsion, die das vernetzte Siliconelastomer enthält.

2. Verfahren nach Anspruch 1, bei dem das organofunktionelle Polysiloxan die Formel (R¹₃SiO_{1/2})ₐ(R²₂SiO_{2/2})_{b}(R³SiO_{3/2})_{c} aufweist, worin R¹, R² und R³ Kohlenwasserstoff oder organofunktionell substituierte Kohlenwasserstoffgruppen mit 1-18 Kohlenstoffatomen sind; unter der Voraussetzung, dass wenigstens eine organofunktionell substituierte Kohlenwasserstoffgruppe an ein Siliciumatom in dem Polysiloxan gebunden ist und dass die organofunktionell substituierte Kohlenwasserstoffgruppe ausgewählt ist aus der Gruppe bestehend aus einer Aminogruppe, einer epoxidierten Aminogruppe, einer quartären Ammoniumgruppe, einer Glycidylgruppe, einer Mercaptogruppe, einer Carboxylgruppe, einer Polyoxyethylenoxypropylengruppe oder Kombinationen davon; a gleich 0-100 ist, b gleich 0-1.000 ist und c gleich 0-100 ist, vorausgesetzt, dass wenigstens zwei von a-c nicht null sind und die organofunktionelle Polysiloxanzusammensetzung bei Raumtemperatur eine Flüssigkeit ist.

3. Verfahren nach Anspruch 1, bei dem der Emulgator zwei nichtionische oberflächenaktive Mittel mit einem kombinierten Hydrophilie-Lipophilie-Gleichgewicht (HLB) von 11,0-16,0 enthält.

4. Verfahren nach Anspruch 1, in dem eine basische Verbindung zu der wässrigen Siliconbasisemulsion gegeben wird und der pH auf einen Wert von 9 oder mehr eingestellt wird, um die Kondensation und Vernetzung des linearen Polydiorganosiloxans mit endständigen Hydroxylgruppen und des silanolhaltigen Silicon-MQ-Harzes beim Ausbilden des vernetzten Siliconelastomers zu fördern.

5. Eine wässrige Siliconemulsion, hergestellt nach dem Verfahren wie in Anspruch 1 definiert.

6. Ein Verfahren, bei dem die wässrige Siliconemulsion in Anspruch 5 auf ein Substrat aufgebracht wird und unter Umgebungsbedingungen zu einem elastomeren Siliconfilm getrocknet wird.

7. Elastomerer Siliconfilm, hergestellt nach dem Verfahren wie in Anspruch 6 definiert.

## Revendications

1. Procédé de fabrication d'une émulsion aqueuse de silicone contenant un élastomère de silicone réticulé comprenant le mélange (i) d'un polydiorganosiloxane hydroxy-terminé linéaire, (ii) d'une résine MQ de silicone contenant du silanol, et (iii) d'un polysiloxane organofonctionnel pour former un mélange de silicone ; l'addition d'au moins un émulsionnant et d'eau au mélange de silicone et le mélange pour obtenir une émulsion aqueuse à base de silicone ; l'addition d'une quantité suffisante d'un composé acide ou basique à l'émulsion aqueuse à base de silicone afin d'ajuster le pH de l'émulsion aqueuse à base de silicone à un pH acide ou basique nécessaire pour faciliter la condensation et la réticulation du polydiorganosiloxane hydroxy-terminé linéaire et de la résine MQ de silicone contenant du silanol dans la formation d'un élastomère de silicone réticulé ; et la neutralisation de l'émulsion aqueuse de silicone contenant l'élastomère de silicone réticulé.

2. Procédé selon la revendication 1, dans lequel le polysiloxane organofonctionnel présente la formule (R¹₃SiO_{1/2})ₐ(R²₂SiO_{2/2})_{b}(R³SiO_{3/2})_{c}, dans laquelle R¹, R² et R³ sont des hydrocarbures ou des groupes hydrocarbonés substitués organofonctionnels ayant 1-18 atomes de carbone ; à condition qu'au moins un groupe hydrocarboné substitué organofonctionnel est fixé à un atome de silicium dans le polysiloxane et le groupe hydrocarboné substitué organofonctionnel est choisi dans le groupe constitué d'un groupe amino, d'un groupe amino époxydé, d'un groupe ammonium quaternaire, d'un groupe glycidyle, d'un groupe mercapto, d'un groupe carboxyle, d'un groupe polyoxyéthylène oxypropylène ou de combinaisons de ceux-ci ; a est égal à 0-100, b est égal à 0-1 000 et c est égal à 0-100, à condition qu'au moins deux de a-c ne sont pas égaux à 0 et que la composition de polysiloxane organofonctionnel est un fluide à température ambiante.

3. Procédé selon la revendication 1, dans lequel l'émulsionnant comprend deux tensioactifs non ioniques présentant un équilibre hydrophile-lipophile combiné (HLB) de 11,0-16,0.

4. Procédé selon la revendication 1, dans lequel on ajoute un composé basique à l'émulsion aqueuse à base de silicone et on ajuste le pH à une valeur de 9 ou supérieure pour faciliter la condensation et la réticulation du polydiorganosiloxane hydroxy-terminé linéaire et de la résine MQ de silicone contenant du silanol dans la formation de l'élastomère de silicone réticulé.

5. Emulsion aqueuse de silicone préparée selon le procédé défini dans la revendication 1.

6. Procédé dans lequel l'émulsion aqueuse de silicone dans la revendication 5 est appliquée sur un substrat et est séchée dans les conditions ambiantes en un film de silicone élastomère.

7. Film de silicone élastomère préparé selon le procédé défini dans la revendication 6.
